# FASCICULE DE BREVET EUROPEEN

(11) **EP 4 129 727 B1**
(45) Date de publication et mention de la délivrance du brevet: **22.11.2023**
(21) Numéro de dépôt: 22185372.4
(22) Date de dépôt: 18.07.2022
(51) Int. Cl.: B60K 7/00, B60K 17/10, F16H 61/00, F16H 61/44, F16H 59/52, F16H 61/444

(54) **ENGIN DE MANUTENTION DE CHARGE**
LASTENFÖRDERGERÄT
LOAD HANDLING MACHINE

(30) Priorité: 28.07.2021 FR 2108197
(43) Date de publication de la demande: 08.02.2023
(73) Titulaire: MANITOU BF, 44150 Ancenis (FR)
(72) Inventeur: AUGEREAU, Benoît, 44150 ANCENIS (FR)
(74) Mandataire: Ipsilon

(56) Documents cités:
- WO-A1-2012/143662
- FR-A1- 2 709 454
- FR-A1- 2 911 658

## Description

La présente invention concerne un engin de manutention de charge.

L'invention concerne en particulier un engin de manutention de charge comprenant au moins deux roues avant, au moins une roue arrière, un châssis dit roulant équipé desdites roues, un ou plusieurs moteurs hydrauliques ou motoréducteurs d'entraînement en rotation des roues avant, un ou plusieurs moteurs hydrauliques ou motoréducteurs d'entraînement en rotation de la ou des roues arrière, et, portés par ledit châssis, un dispositif de manutention de charge avec un état à vide en l'absence de charge et un état en charge , une pompe hydraulique, et une unité de commande, chaque moteur hydraulique ou motoréducteur étant relié à la pompe hydraulique.

Un tel engin est connu comme l'illustre en particulier le brevet FR 2911658.

Dans un tel engin, en général, le débit de fluide issu de la pompe hydraulique se divise entre les moteurs hydrauliques associés chacun à une ou plusieurs roues. Le problème d'un tel engin résulte du fait que si une roue perd son adhérence au sol, tout le débit de la pompe va dans le moteur hydraulique sans résistance associée à ladite roue. La roue tourne dans le vide et l'engin s'arrête. Dans ce cas, pour permettre de nouveau l'avancement de l'engin, il est utilisé un blocage de différentiel « hydraulique » qui crée un niveau de pression dans chaque portion de circuit de circulation de fluide alimentant un moteur hydraulique pour permettre aux roues qui ne patinent pas d'entraîner à nouveau l'engin. D'un point de vue énergétique, un blocage de différentiel est très énergivore.

Un but de l'invention est de proposer un engin de manutention de charge dont la conception permet de manière simple et à moindre coût d'optimiser la motricité de l'engin.

Un autre but de l'invention est de proposer un engin de manutention dont la conception permet de prévenir les risques de perte d'adhérence des roues et donc de limiter au maximum le recours à une fonction blocage de différentiel de l'engin.

A cet effet, l'invention a pour objet un engin de manutention de charge comprenant au moins deux roues avant, au moins une roue arrière, un châssis dit roulant équipé desdites roues, un ou plusieurs moteurs hydrauliques ou motoréducteurs d'entraînement en rotation des roues avant, un ou plusieurs moteurs hydrauliques ou motoréducteurs d'entraînement en rotation de la ou des roues arrière, et, portés par ledit châssis, un dispositif de manutention de charge avec un état à vide en l'absence de charge et un état en charge, une pompe hydraulique, et une unité de commande, chaque moteur hydraulique ou motoréducteur étant relié à la pompe hydraulique, caractérisé en ce que chaque moteur hydraulique ou motoréducteur est relié à la pompe hydraulique par un circuit de circulation de fluide équipé d'un organe d'obturation monté mobile au moins entre une position ouverte dans laquelle le moteur hydraulique ou le motoréducteur est apte à être alimenté en fluide par la pompe hydraulique et la ou les roues associées audit moteur hydraulique ou motoréducteur sont dites motrices et une position fermée dans laquelle la ou les roues associées audit moteur hydraulique ou motoréducteur sont dites non motrices, lesdits circuits de circulation de fluide étant en communication fluidique, en ce que l'engin de manutention comprend au moins un premier mode de fonctionnement dit par propulsion dans lequel la ou les roues arrière sont motrices et les roues avant sont non motrices , un deuxième mode de fonctionnement dit par traction dans lequel les roues avant sont motrices et la ou les roues arrière sont non motrices et un système de détermination d'un paramètre représentatif de l'état à vide ou en charge du dispositif de manutention de charge, et en ce que l'unité de commande est configurée pour acquérir des données du système de détermination d'un paramètre représentatif de l'état à vide ou en charge du dispositif de manutention de charge et pour commander le premier ou le deuxième mode de fonctionnement de l'engin en fonction au moins desdites données. L'engin de manutention de charge comprend donc au moins un premier mode de fonctionnement dit par propulsion dans lequel la ou les roues arrières sont motrices, c'est-à-dire le ou chaque moteur hydraulique ou motoréducteur associé à la ou une roue arrière de l'engin est relié à la pompe hydraulique par un circuit de circulation de fluide équipé d'un organe d'obturation en position ouverte , tandis que les roues avant sont non motrices, c'est-à-dire le ou chaque moteur hydraulique ou motoréducteur associé à une roue avant de l'engin est relié à la pompe hydraulique par un circuit de circulation de fluide équipé d'un organe d'obturation en position fermée de sorte que l'alimentation en fluide du ou des moteurs hydrauliques ou motoréducteurs en fluide issu de la pompe hydraulique est empêchée. L'engin de manutention de charge comprend également un deuxième mode de fonctionnement dit par traction dans lequel, les roues avant sont motrices, c'est-à-dire le ou chaque moteur hydraulique ou motoréducteur associé à une roue avant de l'engin est relié à la pompe hydraulique par un circuit de circulation de fluide équipé d'un organe d'obturation en position ouverte , tandis que les roues arrière sont non motrices, c'est-à-dire le ou chaque moteur hydraulique ou motoréducteur associé à une roue arrière de l'engin est relié à la pompe hydraulique par un circuit de circulation de fluide équipé d'un organe d'obturation en position fermée. L'engin de manutention comprend encore un système de détermination d'un paramètre représentatif de l'état à vide ou en charge du dispositif de manutention de charge à fonction de système de détection de présence de charge. La commande de la position ouverte ou fermée des organes d'obturation en fonction de l'état à vide ou en charge de l'engin permet d'éviter la perte d'adhérence des roues peu chargées. Ainsi, si le poids du conducteur de l'engin est disposé à l'arrière de l'engin pendant la conduite de l'engin, ce qui est généralement le cas pour ce type d'engin, le choix de rendre uniquement la ou les roues arrière motrices, c'est-à-dire d'alimenter en fluide uniquement le ou les moteurs hydrauliques associés à la ou les roues arrière de l'engin lorsque l'engin circule à vide permet de ne pas avoir à tenir compte du cas où les roues avant perdraient leur adhérence dans la mesure où ces dernières ne sont pas motrices. Il n'existe donc pas de risque que tout le débit de fluide issu de la pompe hydraulique aille vers le ou les moteurs hydrauliques d'entraînement en rotation des roues avant puisque le circuit d'alimentation en fluide du ou des moteurs hydrauliques d'entraînement en rotation des roues avant est fermé. De manière similaire, le choix de rendre uniquement la ou les roues avant motrices, c'est-à-dire d'alimenter en fluide uniquement le ou les moteurs hydrauliques associés à la ou les roues avant de l'engin lorsque l'engin circule en charge, c'est-à-dire en présence d'une charge embarquée sur ledit engin, permet de ne pas avoir à tenir compte du cas où les roues arrière perdraient leur adhérence dans la mesure où ces dernières ne sont pas motrices. Il n'existe donc pas de risque que tout le débit de fluide issu de la pompe hydraulique aille vers le ou les moteurs hydrauliques d'entraînement en rotation des roues arrière puisque le circuit d'alimentation en fluide du ou des moteurs hydrauliques d'entraînement en rotation des roues arrière est fermé. La sélection du positionnement des roues motrices en fonction de l'état à vide ou en charge de l'engin permet donc d'accroître la motricité de l'engin et limite la nécessité de recourir à la fonction de blocage de différentiel. Il en résulte une réduction de la consommation d'énergie et un fonctionnement optimisé de l'engin.

Selon un mode de réalisation de l'invention, l'unité de commande est configurée pour commander le premier mode de fonctionnement au moins à l'état à vide du dispositif de manutention de charge et le deuxième mode de fonctionnement au moins à l'état en charge du dispositif de manutention de charge. Ainsi, les roues non motrices sont les roues potentiellement les moins chargées. Le risque de perte d'adhérence étant le plus élevé sur ces roues les moins chargées, l'absence de motricité de ces roues limite les conséquences de la perte d'adhérence. Ce choix de la motricité en fonction de l'état à vide ou en charge de l'engin permet donc de manière simple de surmonter les inconvénients liés à la perte d'adhérence de certaines roues.

Selon un mode de réalisation de l'invention, l'engin comprend un système de détermination d'un paramètre représentatif de la vitesse de l'engin et l'unité de commande est configurée pour acquérir des données du système de détermination d'un paramètre représentatif de la vitesse de l'engin.

Selon un mode de réalisation de l'invention, l'unité de commande est configurée pour commander une commutation entre le premier mode de fonctionnement et le deuxième mode de fonctionnement en fonction au moins desdites données du système de détermination d'un paramètre représentatif de la vitesse de l'engin et pour interdire ladite commutation entre le premier mode de fonctionnement et le deuxième mode de fonctionnement lorsque la vitesse de l'engin est non nulle. Certains moteurs hydrauliques ne sont pas embrayables en roulant. La possibilité de passer d'un mode de fonctionnement à un autre en fonction de la vitesse de l'engin permet de limiter les risques d'endommagement des moteurs hydrauliques.

Selon un mode de réalisation de l'invention, le système de détermination d'un paramètre représentatif de la vitesse de l'engin comprend au moins un capteur de vitesse d'au moins l'une des roues de l'engin. La présence de capteurs de vitesse au niveau des roues de l'engin permet sur la base du différentiel de vitesse de déterminer une perte d'adhérence des roues, notamment sur les roues motrices de l'engin.

Selon un mode de réalisation de l'invention, la pompe hydraulique est une pompe hydraulique à cylindrée variable et le système de détermination d'un paramètre représentatif de la vitesse de l'engin comprend au moins un capteur de mesure de la cylindrée de la pompe. Il en résulte un moyen simple de déterminer une vitesse non nulle de l'engin.

Selon un mode de réalisation de l'invention, le dispositif de manutention de charge comprend au moins un organe de manutention de charge formé par un bras de levage de charge ou un mât d'élévation de charge et au moins un vérin d'entraînement en déplacement d'au moins une partie dudit organe de manutention entre au moins deux positions dites l'une, position basse, l'autre position haute. L'invention peut s'appliquer indifféremment aux engins à mât ou à bras.

Selon un mode de réalisation de l'invention, le système de détermination d'un paramètre représentatif de l'état à vide ou en charge du dispositif de manutention de charge comprend au moins un capteur de pression disposé au niveau du ou d'au moins l'un des vérins d'entraînement en déplacement d'au moins une partie dudit organe de manutention entre les au moins deux positions. La mesure de la pression dans l'une des chambres du vérin d'ajustement en longueur du bras dans le cas d'un bras télescopique ou du vérin de levage du bras ou d'au moins une partie du mât permet de déterminer de manière simple la présence ou l'absence de charge sur l'engin.

Selon un mode de réalisation de l'invention, le système de détermination d'un paramètre représentatif de l'état à vide ou en charge du dispositif de manutention de charge comprend au moins un organe, tel qu'une jauge de contrainte, disposé sur l'engin et configuré pour détecter une déformation et/ou un déplacement du châssis et/ou du dispositif de manutention de charge lors du passage de l'état à vide à en charge ou inversement du dispositif de manutention de charge.

Selon un mode de réalisation de l'invention, l'engin comprend un troisième mode de fonctionnement dans lequel les roues avant et la ou les roues arrière sont motrices. Ce troisième mode de fonctionnement peut être utilisé lorsqu'une motricité maximale est requise.

Selon un mode de réalisation de l'invention, l'engin comprend un sélecteur de modes de fonctionnement actionnable manuellement pour une commutation entre le troisième mode de fonctionnement et l'un ou l'autre des premier et deuxième modes de fonctionnement. Il est ainsi possible pour le conducteur de l'engin de sélectionner manuellement ce troisième mode de fonctionnement.

Selon un mode de réalisation de l'invention, l'engin comprend un inclinomètre et l'unité de commande est configurée pour acquérir des données fournies par l'inclinomètre et pour commander le troisième mode de fonctionnement au moins en fonction des données fournies par ledit inclinomètre. Le troisième mode de fonctionnement peut ainsi être sélectionné lorsqu'une pente raide est détectée.

Selon un mode de réalisation de l'invention, l'engin comprenant un système de détermination d'un paramètre représentatif de la vitesse de l'engin comprenant au moins deux capteurs de vitesse équipant l'un, l'une des roues avant, l'autre, la ou l'une des roues arrière, l'unité de commande est configurée pour acquérir les données desdits capteurs de vitesse, et pour commander le troisième mode de fonctionnement en fonction au moins desdites données. Le troisième mode de fonctionnement peut ainsi être commandé lorsqu'une perte d'adhérence des roues motrices par détection d'un différentiel de vitesse est détectée.

Selon un mode de réalisation de l'invention, l'organe d'obturation d'au moins l'un des circuits de circulation de fluide est une valve électro-proportionnelle de préférence 5 voies/2 positions.

Selon un mode de réalisation de l'invention, l'engin comprend au moins un réservoir de fluide à pression atmosphérique ou à basse pression de préférence comprise entre 10.10⁴ et 30.10⁴ Pa et, en position fermée dudit organe d'obturation d'au moins l'un des circuits de circulation de fluide, la partie du circuit de circulation de fluide s'étendant entre l'organe d'obturation et le moteur hydraulique ou le motoréducteur apte à être alimenté par ledit circuit de circulation de fluide est raccordée audit réservoir de fluide. Cette possibilité de maintenir le réservoir de fluide à basse pression généralement de l'ordre de 3.10⁵ Pa permet de s'affranchir de l'obligation de s'arrêter pour passer d'un mode de fonctionnement à un autre.

L'invention a encore pour objet un procédé de commande d'un engin de manutention de charge comprenant au moins deux roues avant, au moins une roue arrière, un châssis dit roulant équipé desdites roues, un ou plusieurs moteurs hydrauliques ou motoréducteurs d'entraînement en rotation des roues avant, un ou plusieurs moteurs hydrauliques ou motoréducteurs d'entraînement en rotation de la ou des roues arrière, et, portés par ledit châssis, un dispositif de manutention de charge avec un état à vide en l'absence de charge et un état en charge , une pompe hydraulique, et une unité de commande, chaque moteur hydraulique ou motoréducteur étant relié à la pompe hydraulique, caractérisé en ce que chaque moteur hydraulique ou motoréducteur étant relié à la pompe hydraulique par un circuit de circulation de fluide équipé d'un organe d'obturation monté mobile au moins entre une position ouverte dans laquelle le moteur hydraulique ou le motoréducteur est apte à être alimenté en fluide par la pompe hydraulique et la ou les roues associées audit moteur hydraulique ou motoréducteur sont dites motrices et une position fermée dans laquelle la ou les roues associées audit moteur hydraulique ou motoréducteur sont dites non motrices, lesdits circuits de circulation de fluide étant en communication fluidique, et l'engin de manutention comprenant au moins un premier mode de fonctionnement dit par propulsion dans lequel la ou les roues arrière sont motrices et les roues avant sont non motrices , un deuxième mode de fonctionnement dit par traction dans lequel les roues avant sont motrices et la ou les roues arrière sont non motrices et un système de détermination d'un paramètre représentatif de l'état à vide ou en charge du dispositif de manutention de charge, ledit procédé comprend au moins une étape d'acquisition des données du système de détermination d'un paramètre représentatif de l'état à vide ou en charge du dispositif de manutention de charge et une étape de commande du premier ou du deuxième mode de fonctionnement de l'engin en fonction au moins desdites données.

Selon un mode de mise en oeuvre du procédé, l'engin est du type décrit ci-dessus.

### Brève description des dessins

L'invention sera bien comprise à la lecture de la description suivante d'exemples de réalisation, en référence aux dessins annexés dans lesquels :
[Fig. 1] représente deux vues de côté schématiques d'un engin à mât à vide (vue de gauche) et en charge (vue de droite) ;
[Fig. 2] représente une vue de côté schématique d'un engin à bras ;
[Fig. 3] représente une vue schématique des circuits de liaison des roues de l'engin à la pompe hydraulique dans le deuxième mode de fonctionnement ;
[Fig. 4] représente une vue schématique des circuits de liaison des roues de l'engin à la pompe hydraulique dans le premier mode de fonctionnement ;
[Fig. 5] représente une vue schématique des circuits de liaison des roues de l'engin à la pompe hydraulique dans le troisième mode de fonctionnement ;

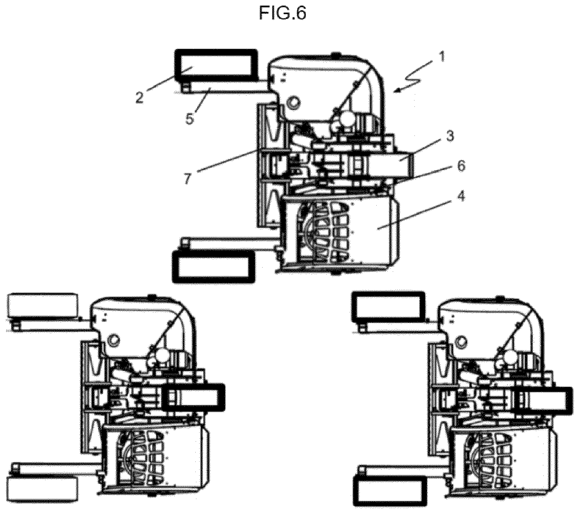

[Fig. 6] représente trois vues de dessus de l'engin correspondant chacune à un mode de fonctionnement de l'engin dans lequel la ou les roues motrices sont en trait gras ;
[Fig. 7] représente une vue schématique partielle sous forme de blocs du fonctionnement de l'unité de commande.

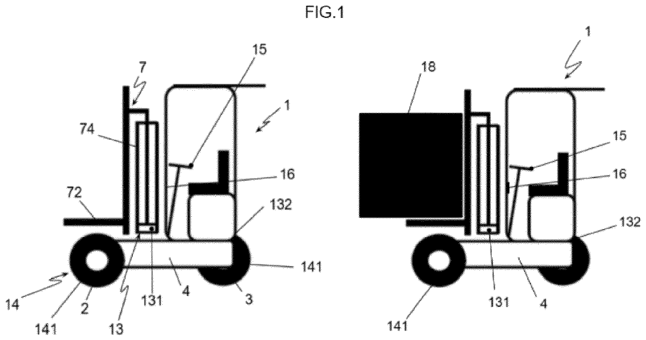

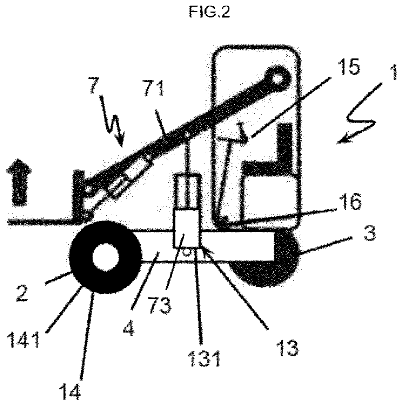

Comme mentionné ci-dessus, l'invention s'applique indifféremment à un engin 1 de manutention de charge 18 à bras 71, tel qu'illustré à la figure 2, ou à mât 72, tel qu'illustré à la figure 1. Cet engin 1 de manutention est un engin roulant. Cet engin 1 comprend deux roues avant 2 et une ou plusieurs roues arrière, représentée en 3 aux figures. Dans les exemples représentés, une seule roue arrière 3 est prévue mais l'invention s'applique indifféremment à des engins comportant une ou plusieurs roues arrière.

Cet engin 1 comprend encore un châssis 4 dit roulant équipé des roues avant 2 et arrière 3 pour former un châssis 4 roulant.

L'engin 1 de manutention de charge comprend encore, au niveau de chaque roue avant 2 d'entraînement en déplacement de l'engin, un moteur 5 hydraulique ou motoréducteur d'entraînement en rotation de ladite roue. Ce moteur 5 hydraulique ou motoréducteur peut être commun aux deux roues avant 2. En variante, chaque roue avant 2 peut être équipée d'un moteur 5 hydraulique distinct, comme cela est représenté aux figures. De même, l'engin 1 de manutention de charge peut comprendre un ou plusieurs moteurs 6 hydrauliques ou motoréducteurs d'entraînement en rotation de la ou des roues arrière 3 d'entraînement en déplacement de l'engin. Dans l'exemple représenté, où l'engin 1 de manutention de charge comprend une seule roue arrière 3, un seul moteur 6 hydraulique ou motoréducteur est prévu. Chaque moteur hydraulique peut être un moteur hydraulique à pistons radiaux. Chaque motoréducteur peut être un moteur orbital ou à axe brisé associé à un réducteur.

Dans l'exemple représenté, chaque moteur hydraulique est un moteur hydraulique à pistons radiaux. Ces moteurs hydrauliques à pistons radiaux ont pour avantage leur faible encombrement et pour inconvénient de devoir passer de l'état "embrayé" à l'état "débrayé" à l'arrêt, c'est-à-dire à vitesse nulle de l'engin 1.

L'engin 1 de manutention de charge comprend encore un dispositif 7 de manutention de charge avec un état dit à vide en l'absence de charge 18 et un état en charge, en présence d'une charge 18.

Comme mentionné ci-dessus, le dispositif 7 de manutention de charge comprend au moins un organe de manutention de charge formé par un bras 71 de levage de charge ou un mât 72 d'élévation de charge et au moins un vérin d'entraînement en déplacement d'au moins une partie dudit organe de manutention entre au moins deux positions dites, l'une position basse, l'autre position haute.

Dans le cas d'un engin de manutention de charge à mât porte-fourche, comme illustré à la figure 1, le vérin d'entraînement en déplacement du mât porte-fourche, entre une position haute et une position basse et inversement, est représenté en 74. Dans le cas d'un engin de manutention à bras couplé à pivotement au châssis par une liaison pivot d'axe dit horizontal parallèle au plan d'appui au sol de l'engin à l'état positionné de l'engin sur une surface plane horizontale, le vérin de levage du bras, pour un déplacement à pivotement du bras entre une position haute et une position basse, est représenté en 73 aux figures. Ce bras 71 de levage peut, dans le cas d'un bras de levage télescopique ajustable en longueur, être équipé d'un vérin de rentrée ou de sortie du télescope. Ce bras 71 de levage est équipé, à son extrémité libre, d'un accessoire, tel qu'un godet, une fourche ou autre pour la manutention de la charge 18.

L'engin 1 est encore équipé d'un siège de réception du conducteur de l'engin disposé à l'intérieur d'une cabine de pilotage de l'engin. Indépendamment du dispositif 7 de manutention de charge, ce siège et la cabine s'étendent de préférence plus particulièrement au-dessus de la roue arrière 3 de l'engin. Cela implique qu'à l'état à vide de l'engin 1, le risque de perte d'adhérence des roues est situé plutôt au niveau des roues avant de l'engin qui supportent moins de poids. De même, dans le cas d'un bras de levage pivotant, le liaison pivot du bras au châssis est située dans la partie arrière de l'engin pris par rapport au sens de déplacement en marche avant de l'engin.

L'engin 1 de manutention de charge comprend encore une pompe 8 hydraulique montée sur le châssis 4 roulant. Cette pompe 8 hydraulique est entraînée par un moteur 19 thermique. Cette pompe 8 hydraulique peut être une pompe à cylindrée fixe ou variable. Cette seconde solution correspond à celle représentée. L'engin 1 de manutention de charge comprend encore une unité 12 de commande. Ladite unité de commande se présente sous la forme d'un système électronique et informatique qui comprend par exemple un microprocesseur et une mémoire de travail. Selon un aspect particulier, l'unité 12 de commande peut se présenter sous la forme d'un automate programmable. Autrement dit, les fonctions et étapes décrites peuvent être mises en oeuvre sous forme de programme informatique ou via des composants matériels (p. ex. des réseaux de portes programmables). En particulier, les fonctions et étapes opérées par l'unité de commande ou ses modules peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array , ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application ). Il est aussi possible de combiner des parties informatiques et des parties électroniques. Lorsqu'il est précisé que l'unité ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

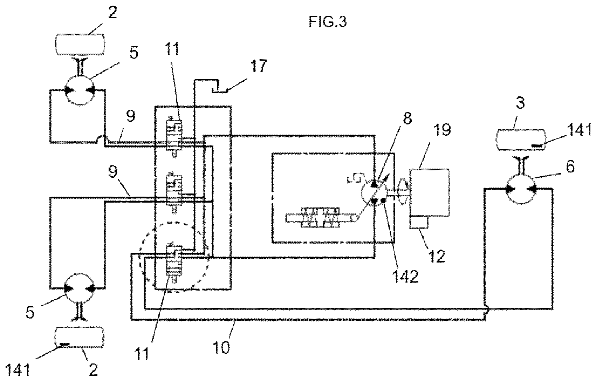

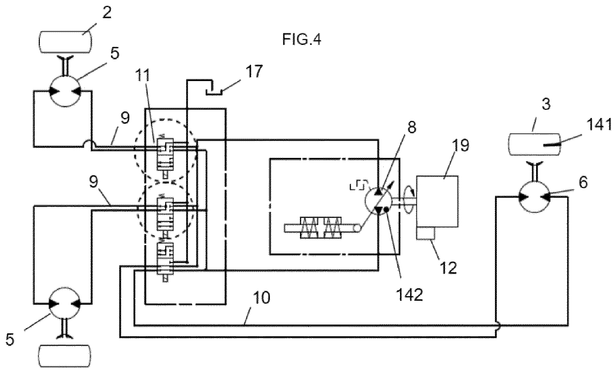

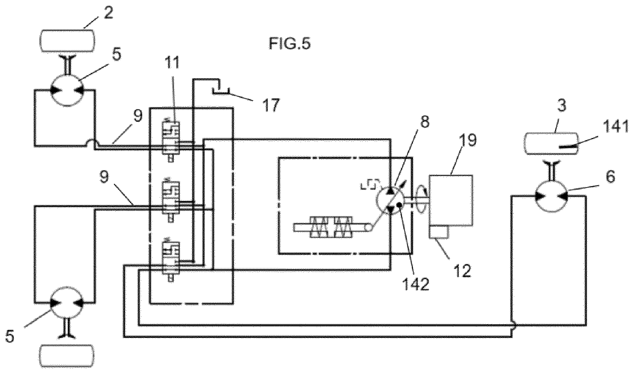

La pompe 8 hydraulique, entraînée en fonctionnement par le moteur 19 thermique, est apte à alimenter en fluide, en particulier en huile, chaque moteur 5, 6 hydraulique. Chaque moteur 5 ou 6 hydraulique est donc relié à la pompe 8 hydraulique par un circuit de circulation de fluide équipé d'un organe 11 d'obturation monté mobile entre au moins une position ouverte dans laquelle le moteur hydraulique ou motoréducteur est apte à être alimenté en fluide par la pompe 8 hydraulique et la ou les roues associées sont dites motrices et une position fermée dans laquelle la ou les roues associées sont dites non motrices car le moteur hydraulique associé n'est pas alimenté en fluide par la pompe hydraulique. Ainsi, dans l'exemple représenté aux figures 3 à 5, le circuit de circulation de fluide reliant une roue avant 2 à la pompe 8 hydraulique est représenté en 9 aux figures, tandis que le circuit de circulation de fluide reliant une roue arrière 3 à la pompe 8 hydraulique est représenté en 10 aux figures. L'ensemble comprend deux roues avant et une roue arrière et donc deux circuits de circulation de fluide, représentés en 9, et un circuit de circulation de fluide, représenté en 10. Chaque circuit de circulation de fluide comprend un organe 11 d'obturation se présentant, dans les exemples représentés, sous forme d'une valve électro-proportionnelle, de préférence cinq voies, deux positions. Chaque circuit 9 ou 10 de circulation de fluide est distinct des autres circuits de circulation de fluide, dans la zone du circuit s'étendant entre l'organe 11 d'obturation du circuit et les moteurs 5 ou 6 hydrauliques alimentés par ledit circuit. Cette portion du circuit de circulation de fluide s'étendant entre l'organe 11 d'obturation et le moteur hydraulique dudit circuit comprend à chaque fois une branche aller reliant l'organe 11 d'obturation à une entrée de fluide du moteur hydraulique et une branche retour reliant la sortie de fluide du moteur hydraulique à l'organe 11 d'obturation étant entendu que chaque moteur hydraulique comprend au moins une entrée et une sortie de fluide. Chaque portion de circuit 9 ou 10 de circulation de fluide, disposée entre l'organe 11 d'obturation et la pompe 8 hydraulique est, au contraire, au moins partiellement commune à l'ensemble des circuits de circulation de fluide de sorte que lesdits circuits 9, 10 de circulation de fluide sont en communication fluidique. On comprend ainsi que lorsqu'au moins deux organes 11 d'obturation sont simultanément en position ouverte si la roue entraînée en rotation par le moteur hydraulique de l'un des circuits de circulation de fluide est moins chargée qu'une autre roue entraînée en rotation par le moteur hydraulique d'un autre circuit de circulation de fluide, il existe un risque que tout le fluide, c'est-à-dire toute l'huile issue de la pompe 8 hydraulique, se dirige vers le moteur hydraulique associé à la roue moins chargée au détriment du moteur hydraulique associé à l'autre roue. Ainsi, en position ouverte de deux organes 11 d'obturation de deux circuits de circulation de fluide, la pompe 8 hydraulique alimente en entrée à la fois le moteur hydraulique de l'un des circuits et le moteur hydraulique de l'autre des circuits et les retours d'huile des moteurs hydrauliques après passage de l'organe d'obturation desdits circuits de circulation de fluide associé auxdits circuits se rejoignent pour former un retour commun jusqu'à l'entrée de la pompe 8 hydraulique. En position fermée de l'organe 11 d'obturation d'un circuit de circulation de fluide, le moteur hydraulique dudit circuit de circulation de fluide ne peut pas être alimenté par la pompe 8 hydraulique et l'entrée et la sortie d'huile dudit moteur hydraulique sont raccordées via l'organe 11 d'obturation à un réservoir 17 de fluide. En résumé, deux des voies de l'organe 11 d'obturation sont utilisées pour permettre l'alimentation en fluide du moteur hydraulique à partir de la pompe 8 hydraulique et le retour du fluide du moteur hydraulique à ladite pompe hydraulique en position ouverte dudit organe 11 d'obturation tandis qu'en position fermée dudit organe d'obturation, toute alimentation en fluide du moteur hydraulique à partir de la pompe hydraulique est empêchée et une voie de l'organe 11 d'obturation permet le raccordement de l'entrée et de la sortie du moteur hydraulique au réservoir 17 de fluide. Ce réservoir 17 de fluide peut être à pression atmosphérique ou à basse pression, de préférence comprise entre 10 × 10⁴ et 30 × 10⁴ Pa. Cette solution d'un réservoir de fluide à basse pression peut être retenue notamment lorsque les moteurs hydrauliques sont des moteurs hydrauliques à pistons radiaux pour aider à l'embrayage desdits moteurs. Bien évidemment, le sens d'entraînement en rotation de la pompe 8 hydraulique peut être inversé en fonction du sens de déplacement en marche avant ou en marche arrière de l'engin sans changer la conception du reste du circuit.

L'engin 1 comprend encore un système 13 de détermination d'un paramètre représentatif de l'état à vide ou en charge du dispositif 7 de manutention de charge. Ce système 13 de détermination d'un paramètre représentatif de l'état à vide ou en charge du dispositif 7 de manutention de charge peut affecter un grand nombre de formes. Ainsi, le système 13 de détermination d'un paramètre représentatif de l'état à vide ou en charge du dispositif 7 de manutention de charge peut comprendre au moins un capteur 131 de pression disposé au niveau du ou d'au moins l'un des vérins 73, 74 d'entraînement en déplacement d'au moins une partie dudit organe de manutention entre les au moins deux positions. Ainsi, ce capteur de pression peut être disposé au niveau de l'une des chambres du vérin 73 de levage du bras 71 ou dans le vérin de rentrée ou de sortie du télescope dans le cas d'un engin à bras 71 télescopique ou dans l'une des chambres du vérin 74 de levage du mât 72 à fourche dans le cas d'un engin à mât.

En variante, ou en complément, le système 13 de détermination d'un paramètre représentatif de l'état à vide ou en charge du dispositif 7 de manutention de charge peut comprendre au moins un organe 132, tel qu'une jauge de contrainte, disposé sur l'engin 1 et configuré pour détecter une déformation et/ou un déplacement du châssis 4 et/ou du dispositif 7 de manutention de charge lors du passage de l'état à vide à en charge ou inversement du dispositif 7 de manutention de charge. Ainsi, la roue arrière peut être une roue directionnelle pivotante. La jauge de contrainte peut être disposée au niveau de ce pivot arrière pour mesurer l'allègement de la charge au niveau dudit pivot. En variante ou en complément, une jauge de contrainte peut être prévue pour mesurer la déformation d'une partie de la structure, à savoir le châssis et/ou le mât dudit engin.

Indépendamment de sa conception, ce système 13 de détermination d'un paramètre représentatif de l'état à vide ou en charge du dispositif 7 de manutention de charge permet de déterminer la présence ou l'absence d'une charge.

L'unité 12 de commande est quant à elle configurée pour acquérir des données du système 13 de détermination d'un paramètre représentatif de l'état à vide ou en charge du dispositif 7 de manutention de charge.

L'engin 1 de manutention de charge comprend encore un premier mode de fonctionnement, dit par propulsion, dans lequel la ou les roues arrière 3 sont motrices et les roues avant 2 sont non motrices, un deuxième mode de fonctionnement, dit par traction, dans lequel la ou les roues avant 2 sont motrices, et la ou les roues arrière 3 sont non motrices, c'est-à-dire les organes 11 d'obturation des circuits 9 de circulation de fluide reliant les moteurs 5 hydrauliques des roues avant à la pompe 8 hydraulique sont en position ouverte tandis que l'organe 12 d'obturation du circuit 10 de circulation de fluide reliant le moteur 6 hydraulique de la roue arrière à la pompe hydraulique est en position fermée.

Les premier et deuxième modes de fonctionnement sont sélectivement activables. En particulier, l'unité 12 de commande est configurée pour commander le premier ou le deuxième mode de fonctionnement de l'engin 1 en fonction au moins des données du système 13 de détermination d'un paramètre représentatif de l'état à vide ou en charge du dispositif 7 de manutention de charge. Ainsi, l'unité12 de commande est configurée pour commander le premier mode de fonctionnement, au moins à l'état à vide du dispositif 7 de manutention de charge, et le deuxième mode de fonctionnement, au moins à l'état en charge du dispositif 7 de manutention de charge. La commande du premier mode de fonctionnement s'opère par amenée en position ouverte de l'organe 11 d'obturation du circuit 10 de circulation de fluide du moteur 6 hydraulique de la roue arrière 3 et en position fermée de l'organe 11 d'obturation des circuits 9 de circulation de fluide des moteurs 5 hydrauliques des roues avant 2 tandis que la commande du deuxième mode de fonctionnement s'opère par amenée en position ouverte de l'organe 11 d'obturation du circuit 9 de circulation de fluide de chaque moteur 5 hydraulique associé à une roue avant 2 et en position fermée de l'organe 11 d'obturation du circuit 10 de circulation de fluide du moteur 6 hydraulique de la roue arrière.

Pour parfaire l'engin 1, ce dernier peut comprendre un système 14 de détermination d'un paramètre représentatif de la vitesse de l'engin 1 et l'unité 12 de commande est configurée pour acquérir des données du système 14 de détermination d'un paramètre représentatif de la vitesse de l'engin 1. Ainsi, cette disposition permet d'utiliser des moteurs hydrauliques "non embrayables" en roulant. La commutation automatique entre les premier et deuxième modes de fonctionnement, en fonction de la présence ou de l'absence de charge ne peut s'opérer qu'à l'arrêt de l'engin. Ce système 14 de détermination d'un paramètre représentatif de la vitesse de l'engin peut affecter un grand nombre de formes. Ainsi, le système 14 de détermination d'un paramètre représentatif de la vitesse de l'engin peut comprendre au moins un capteur 141 de vitesse d'au moins l'une des roues 2, 3 de l'engin 1.

En variante ou en complément, le système 14 de détermination d'un paramètre représentatif de la vitesse de l'engin peut comprendre au moins un capteur 142 de mesure de la cylindrée de la pompe 8 dans le cas d'une pompe 8 hydraulique à cylindrée variable.

L'engin 1 peut encore comprendre un troisième mode de fonctionnement dans lequel les roues avant 2 et la ou les roues arrière 3 sont motrices.

Généralement, l'engin 1 comprend un sélecteur 15 de modes de fonctionnement actionnable manuellement pour une commutation entre le troisième mode de fonctionnement et l'un ou l'autre des premier et deuxième modes de fonctionnement. Ce sélecteur 15 de modes est formé par exemple par un organe de commande, tel qu'un levier disposé à l'intérieur de la cabine de pilotage, ce sélecteur 15 de mode étant actionné par le conducteur de l'engin 1.

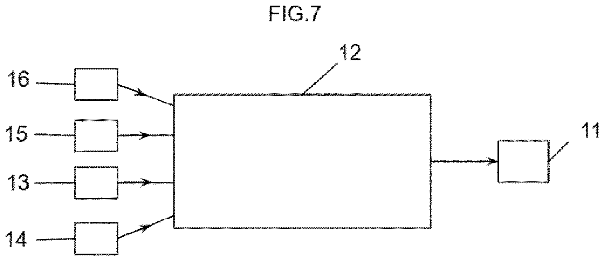

En variante ou en complément, ce troisième mode de fonctionnement peut être automatiquement activable. Il peut être recouru à ce troisième mode de fonctionnement lorsque par exemple l'engin circule sur un terrain en pente. Ainsi, par exemple, l'engin 1 comprend un inclinomètre 16 et l'unité 12 de commande est configurée pour acquérir des données fournies par l'inclinomètre 16 et pour commander le troisième mode au moins en fonction des données fournies par ledit inclinomètre 16. Il peut encore être recouru à ce troisième mode de fonctionnement lorsqu'une perte d'adhérence d'une roue motrice est détectée. Dans ce cas, l'engin 1 comprend un système 14 de détermination d'un paramètre représentatif de la vitesse de l'engin comprenant au moins deux capteurs 141 de vitesse équipant l'un, l'une des roues avant 2, l'autre, la ou l'une des roues arrière 3. L'unité 12 de commande est configurée pour acquérir les données desdits capteurs 141 de vitesse, et pour commander le troisième mode en fonction au moins desdites données. La présence de plusieurs capteurs 141 de vitesse équipant chacun une roue distincte permet de déterminer des différentiels de vitesse et donc de détecter aisément une perte d'adhérence d'au moins l'une des roues. Bien évidemment, à chaque désactivation du troisième mode de fonctionnement, l'engin revient dans le premier ou le deuxième mode de fonctionnement en fonction de l'état à vide ou en charge dudit engin. Il résulte de ce qui précède que l'unité 12 de commande est configurée pour recevoir en entrée des données issues de l'inclinomètre 16, du système 13 de détermination de l'état à vide ou en charge de l'engin 1, du système 14 de détermination de la vitesse de l'engin 1 et du sélecteur 15 de mode pour agir en sortie sur les organes 11 d'obturation des circuits 9 et 10 de circulation du fluide, comme illustré à la figure 7.

Le fonctionnement d'un tel engin est le suivant. On suppose que le premier mode de fonctionnement est le mode de fonctionnement activé par défaut au démarrage du moteur 19 thermique. Tant que le système 13 de détermination de l'état à vide ou en charge de l'engin fournit à l'unité 12 de commande des informations correspondant à l'état à vide de l'engin, le premier mode de fonctionnement de l'engin 1 est maintenu, sauf si le conducteur de l'engin actionne le sélecteur 15 de mode pour commander le troisième mode de fonctionnement de l'engin 1 lorsque ce dernier est présent ou que l'inclinomètre indique une forte pente rendant nécessaire l'activation du troisième mode de fonctionnement ou qu'une perte d'adhérence de la roue arrière motrice est détectée à l'aide du système 14 de détermination de vitesse de l'engin. Ce passage du premier au troisième mode de fonctionnement ne s'effectue que si la vitesse de l'engin est nulle lorsque la nature des moteurs hydrauliques contraint ce type de fonctionnement. A l'état activé du troisième mode de fonctionnement, le retour dans le premier mode de fonctionnement peut s'opérer de manière manuelle par actionnement du sélecteur 15 de mode ou de manière automatique lorsque la pente du terrain sur lequel l'engin circule est faible, c'est-à-dire inférieure à une valeur prédéterminée ou lorsque la perte d'adhérence de la roue arrière motrice n'est plus présente. Le passage du premier au deuxième mode de fonctionnement peut s'opérer lorsque la présence d'une charge 18 est détectée à l'aide des données fournies par le système 13 de détermination de l'état à vide ou en charge dudit engin. Le passage peut ne s'opérer que lorsque la vitesse de l'engin est nulle si la nature des moteurs hydrauliques contraint ce type de fonctionnement. Tant que le système 13 de détermination de l'état à vide ou en charge de l'engin fournit à l'unité 12 de commande des informations correspondant à l'état en charge de l'engin, le deuxième mode de fonctionnement de l'engin est maintenu, sauf si le conducteur de l'engin actionne le sélecteur 15 de mode pour commander le troisième mode de fonctionnement de l'engin 1 lorsque ce dernier est présent ou que l'inclinomètre indique une forte pente rendant nécessaire l'activation du troisième mode de fonctionnement ou qu'une perte d'adhérence des roues avant motrices est détectée à l'aide du système 14 de détermination de vitesse de l'engin. Ce passage du deuxième au troisième mode de fonctionnement ne s'effectue que si la vitesse de l'engin est nulle lorsque la nature des moteurs hydrauliques contraint ce type de fonctionnement. A l'état activé du troisième mode de fonctionnement, le retour au deuxième mode de fonctionnement peut s'opérer de manière manuelle par actionnement du sélecteur 15 de mode ou de manière automatique lorsque la pente du terrain sur lequel l'engin circule est faible, c'est-à-dire inférieure à une valeur prédéterminée ou lorsque la perte d'adhérence des roues avant motrices n'est plus présente.

## Revendications

1. Engin (1) de manutention de charge (18) comprenant au moins deux roues avant (2), au moins une roue arrière (3), un châssis (4) dit roulant équipé desdites roues (2, 3), un ou plusieurs moteurs (5) hydrauliques ou motoréducteurs d'entraînement en rotation des roues avant (2), un ou plusieurs moteurs (6) hydrauliques ou motoréducteurs d'entraînement en rotation de la ou des roues arrière (3), et, portés par ledit châssis (4), un dispositif (7) de manutention de charge avec un état à vide en l'absence de charge (18) et un état en charge, une pompe (8) hydraulique, et une unité (12) de commande, chaque moteur (5, 6) hydraulique ou motoréducteur étant relié à la pompe (8) hydraulique, **caractérisé en ce que** chaque moteur (5, 6) hydraulique ou motoréducteur est relié à la pompe (8) hydraulique par un circuit (9, 10) de circulation de fluide équipé d'un organe (11) d'obturation monté mobile au moins entre une position ouverte dans laquelle le moteur hydraulique (5 ; 6) ou le motoréducteur est apte à être alimenté en fluide par la pompe (8) hydraulique et la ou les roues (2 ; 3) associées audit moteur hydraulique ou motoréducteur sont dites motrices et une position fermée dans laquelle la ou les roues (2 ; 3) associées audit moteur hydraulique ou motoréducteur sont dites non motrices, lesdits circuits (9, 10) de circulation de fluide étant en communication fluidique, **en ce que** l'engin (1) de manutention comprend au moins un premier mode de fonctionnement dit par propulsion dans lequel la ou les roues arrière (3) sont motrices et les roues avant (2) sont non motrices, un deuxième mode de fonctionnement dit par traction dans lequel les roues avant sont motrices et la ou les roues arrière sont non motrices et un système (13) de détermination d'un paramètre représentatif de l'état à vide ou en charge du dispositif (7) de manutention de charge, et **en ce que** l'unité (12) de commande est configurée pour acquérir des données du système (13) de détermination d'un paramètre représentatif de l'état à vide ou en charge du dispositif (7) de manutention de charge et pour commander le premier ou le deuxième mode de fonctionnement de l'engin (1) en fonction au moins desdites données.

2. Engin (1) de manutention de charge selon la revendication 1, dans lequel l'unité (12) de commande est configurée pour commander le premier mode de fonctionnement au moins à l'état à vide du dispositif (7) de manutention de charge et le deuxième mode de fonctionnement au moins à l'état en charge du dispositif (7) de manutention de charge.

3. Engin (1) de manutention de charge selon l'une des revendications 1 ou 2, dans lequel l'engin (1) comprend un système (14) de détermination d'un paramètre représentatif de la vitesse de l'engin (1) et en ce que l'unité (12) de commande est configurée pour acquérir des données du système (14) de détermination d'un paramètre représentatif de la vitesse de l'engin (1).

4. Engin (1) de manutention de charge selon la revendication 3, dans lequel l'unité (12) de commande est configurée pour commander une commutation entre le premier mode de fonctionnement et le deuxième mode de fonctionnement en fonction au moins desdites données du système (14) de détermination d'un paramètre représentatif de la vitesse de l'engin et pour interdire ladite commutation entre le premier mode de fonctionnement et le deuxième mode de fonctionnement lorsque la vitesse de l'engin est non nulle.

5. Engin (1) de manutention de charge selon l'une des revendications 3 ou 4, dans lequel le système (14) de détermination d'un paramètre représentatif de la vitesse de l'engin comprend au moins un capteur (141) de vitesse d'au moins l'une des roues (2, 3) de l'engin (1).

6. Engin (1) de manutention de charge selon l'une des revendications 3 à 5, dans lequel la pompe (8) hydraulique est une pompe hydraulique à cylindrée variable et en ce que le système (14) de détermination d'un paramètre représentatif de la vitesse de l'engin comprend au moins un capteur (142) de mesure de la cylindrée de la pompe (8).

7. Engin (1) de manutention de charge selon l'une des revendications 1 à 6, dans lequel le dispositif (7) de manutention de charge comprend au moins un organe de manutention de charge formé par un bras (71) de levage de charge ou un mât (72) d'élévation de charge et au moins un vérin (73, 74) d'entraînement en déplacement d'au moins une partie dudit organe de manutention entre au moins deux positions dites l'une, position basse, l'autre, position haute.

8. Engin (1) de manutention de charge selon la revendication 7, dans lequel le système (13) de détermination d'un paramètre représentatif de l'état à vide ou en charge du dispositif (7) de manutention de charge comprend au moins un capteur (131) de pression disposé au niveau du ou d'au moins l'un des vérins (73, 74) d'entraînement en déplacement d'au moins une partie dudit organe de manutention entre les au moins deux positions.

9. Engin (1) de manutention de charge selon l'une des revendications 1 à 8, dans lequel le système (13) de détermination d'un paramètre représentatif de l'état à vide ou en charge du dispositif (7) de manutention de charge comprend au moins un organe (132), tel qu'une jauge de contrainte, disposé sur l'engin (1) et configuré pour détecter une déformation et/ou un déplacement du châssis (4) et/ou du dispositif (7) de manutention de charge lors du passage de l'état à vide à en charge ou inversement du dispositif (7) de manutention de charge.

10. Engin (1) de manutention de charge selon l'une des revendications 1 à 9, dans lequel l'engin (1) comprend un troisième mode de fonctionnement dans lequel les roues avant (2) et la ou les roues arrière (3) sont motrices.

11. Engin (1) de manutention de charge selon la revendication 10, dans lequel l'engin (1) comprend un sélecteur (15) de modes de fonctionnement actionnable manuellement pour une commutation entre le troisième mode de fonctionnement et l'un ou l'autre des premier et deuxième modes de fonctionnement.

12. Engin (1) de manutention de charge selon l'une des revendications 10 ou 11, dans lequel l'engin (1) comprend un inclinomètre (16) et en ce que l'unité (12) de commande est configurée pour acquérir des données fournies par l'inclinomètre (16) et pour commander le troisième mode de fonctionnement au moins en fonction des données fournies par ledit inclinomètre (16).

13. Engin (1) de manutention de charge selon l'une des revendications 10 à 12, dans lequel l'engin (1) comprenant un système (14) de détermination d'un paramètre représentatif de la vitesse de l'engin comprenant au moins deux capteurs (141) de vitesse équipant l'un, l'une des roues avant (2), l'autre, la ou l'une des roues arrière (3), l'unité (12) de commande est configurée pour acquérir les données desdits capteurs (141) de vitesse, et pour commander le troisième mode de fonctionnement en fonction au moins desdites données.

14. Engin (1) de manutention de charge selon l'une des revendications 1 à 13, dans lequel l'organe (11) d'obturation d'au moins l'un des circuits (9, 10) de circulation de fluide est une valve électro-proportionnelle de préférence 5 voies/2 positions.

15. Engin (1) de manutention de charge selon l'une des revendications 1 à 14, dans lequel l'engin (1) comprend au moins un réservoir (17) de fluide à pression atmosphérique ou à basse pression de préférence comprise entre 10.10⁴ et 30.10⁴ Pa et en ce que, en position fermée dudit organe (11) d'obturation d'au moins l'un des circuits (9, 10) de circulation de fluide, la partie du circuit (9, 10) de circulation de fluide s'étendant entre l'organe (11) d'obturation et le moteur (5, 6) hydraulique ou le motoréducteur apte à être alimenté par ledit circuit (9, 10) de circulation de fluide est raccordée audit réservoir (17) de fluide.

## Patentansprüche

1. Lastenfördergerät (1) (18), das mindestens zwei vordere Räder (2), mindestens zwei hintere Räder (3), einen Rahmen (4), bezeichnet als rollender Rahmen, der mit den Rädern (2, 3) ausgestattet ist, einen oder mehrere hydraulische (5) oder Getriebemotoren, um die vorderen Räder (2) in Rotation zu versetzen, einen oder mehrere hydraulische (6) oder Getriebemotoren, um das oder die hinteren Räder (3) in Rotation zu versetzen, und, getragen von dem Rahmen (4), eine Lastenfördervorrichtung (7) mit einem Leerzustand bei Abwesenheit von Last (18) und einem Lastzustand, eine hydraulische Pumpe (8) und eine Steuereinheit (12) umfasst, wobei jeder hydraulische (5, 6) oder Getriebemotor mit der hydraulischen Pumpe (8) verbunden ist, **dadurch gekennzeichnet, dass** jeder hydraulische (5, 6) oder Getriebemotor mit der hydraulischen Pumpe (8) durch einen Fluidzirkulationskreislauf (9, 10) verbunden ist, der mit einem Absperrorgan (11) ausgestattet ist, das beweglich zwischen mindestens einer offenen Position, in der der hydraulische (5; 6) oder Getriebemotor dazu in der Lage ist, durch die hydraulische Pumpe (8) mit Fluid versorgt zu werden und das oder die Räder (2; 3), die mit dem hydraulischen oder Getriebemotor assoziiert sind, als Antriebsräder bezeichnet werden, und einer geschlossenen Position verbunden ist, in der das oder die Räder (2; 3), die mit dem hydraulischen oder den Getriebemotor assoziiert sind, als Nicht-Antriebsräder bezeichnet werden, wobei die Fluidzirkulationskreisläufe (9, 10) in fluidischer Kommunikation sind, dadurch, dass das Lastenfördergerät (1) mindestens einen ersten Betriebsmodus umfasst, bezeichnet als Schubmodus, in dem das oder die hinteren Räder (3) Antriebsräder sind und die vorderen Räder (2) Nicht-Antriebsräder sind, einen zweiten Betriebsmodus, bezeichnet als Zugmodus, in dem die vorderen Räder Antriebsräder sind und das oder die hinteren Räder Nicht-Antriebsräder sind, und ein System (13) zur Bestimmung eines repräsentativen Parameters des Leer- oder Lastzustands der Lastenfördervorrichtung (7), und dadurch, dass die Steuereinheit (12) konfiguriert ist, um Daten des Systems (13) zur Bestimmung eines repräsentativen Parameters des Leer- oder Lastzustands der Lastenfördervorrichtung (7) zu erfassen und um den ersten und den zweiten Betriebsmodus des Geräts (1) in Funktion mindestens der Daten zu steuern.

2. Lastenfördergerät (1) nach Anspruch 1, wobei die Steuereinheit (12) konfiguriert ist, um den ersten Betriebsmodus mindestens im Leerzustand der Lastenfördervorrichtung (7) und den zweiten Betriebsmodus mindestens im Ladezustand der Lastenfördervorrichtung (7) zu steuern.

3. Lastenfördergerät (1) nach einem der Ansprüche 1 oder 2, wobei das Gerät (1) ein System (14) zur Bestimmung eines repräsentativen Parameters der Geschwindigkeit des Geräts (1) umfasst, und dadurch, dass die Steuereinheit (12) konfiguriert ist, um Daten des Systems (14) zur Bestimmung eines repräsentativen Parameters der Geschwindigkeit des Geräts (1) zu erfassen.

4. Lastenfördergerät (1) nach Anspruch 3, wobei die Steuereinheit (12) konfiguriert ist, um eine Umwandlung zwischen dem ersten Betriebsmodus und dem zweiten Betriebsmodus in Funktion mindestens der Daten des Systems (14) zur Bestimmung eines repräsentativen Parameters der Geschwindigkeit des Geräts zu steuern, und um die Umwandlung zwischen dem ersten Betriebsmodus und dem zweiten Betriebsmodus zu verhindern, wenn die Geschwindigkeit des Geräts nicht null ist.

5. Lastenfördergerät (1) nach einem der Ansprüche 3 oder 4, wobei das System (14) zur Bestimmung eines repräsentativen Parameters der Geschwindigkeit des Geräts mindestens einen Geschwindigkeitssensor (141) mindestens eines der Räder (2, 3) des Geräts (1) umfasst.

6. Lastenfördergerät (1) nach einem der Ansprüche 3 bis 5, wobei die hydraulische Pumpe (8) eine hydraulische Pumpe mit variablem Hubraum ist, und dadurch, dass das System (14) zur Bestimmung eines repräsentativen Parameters der Geschwindigkeit des Geräts mindestens einen Sensor (142) zur Messung des Hubraums der Pumpe (8) umfasst.

7. Lastenfördergerät (1) nach einem der Ansprüche 1 bis 6, wobei die Lastenfördervorrichtung (7) mindestens ein Lastenförderorgan umfasst, das von einem Lastenhebearm (71) oder einem Lastenhebemast (72) und mindestens einem Zylinder (73, 74) zur Verschiebung mindestens einen Teil des Förderorgans zwischen mindestens zwei Positionen zu, von denen die eine als untere Position, die andere als obere Position bezeichnet wird, gebildet ist.

8. Lastenfördergerät (1) nach Anspruch 7, wobei das System (13) zur Bestimmung eines repräsentativen Parameters des Leer- oder Lastzustands der Lastenfördervorrichtung (7) mindestens einen Drucksensor (131) umfasst, der auf der Ebene des oder mindestens eines der Zylinder (73, 74) zur Verschiebung mindestens einen Teil des Förderorgans zwischen den mindestens zwei Positionen angeordnet ist.

9. Lastenfördergerät (1) nach einem der Ansprüche 1 bis 8, wobei das System (13) zur Bestimmung eines repräsentativen Parameters des Leer- oder Lastzustands der Lastenfördervorrichtung (7) mindestens ein Organ (132) umfasst, wie z. B. einen Dehnungsmesser, der auf dem Gerät (1) angebracht und konfiguriert ist, um eine Verformung und/oder eine Verschiebung des Rahmens (4) und/oder der Lastenfördervorrichtung (7) beim Übergang vom Leerzustand in den Lastzustand oder umgekehrt der Lastenfördervorrichtung (7) nachzuweisen.

10. Lastenfördergerät (1) nach einem der Ansprüche 1 bis 9, wobei das Gerät (1) einen dritten Betriebsmodus umfasst, in dem die vorderen Räder (2) und das oder die hinteren Räder (3) Antriebsräder sind.

11. Lastenfördergerät (1) nach Anspruch 10, wobei das Gerät (1) einen Betriebsmoduswähler (15) umfasst, der manuell betätigt werden kann, für eine Umwandlung zwischen dem dritten Betriebsmodus und dem einen oder dem anderen des ersten und des zweiten Betriebsmodus.

12. Lastenfördergerät (1) nach einem der Ansprüche 10 oder 11, wobei das Gerät (1) einen Neigungsmesser (16) umfasst, und dadurch, dass die Steuereinheit (12) konfiguriert ist, um Daten zu erfassen, die vom Neigungsmesser (16) geliefert werden, und um den dritten Betriebsmodus mindestens in Funktion der Daten zu steuern, die von dem Neigungsmesser (16) geliefert werden.

13. Lastenfördergerät (1) nach einem der Ansprüche 10 bis 12, wobei das Gerät (1) ein System (14) zur Bestimmung eines repräsentativen Parameters der Geschwindigkeit des Geräts umfasst, das mindestens zwei Geschwindigkeitssensoren (141) umfasst, von denen einer eines der Vorderräder (2), der andere das oder eines der Hinterräder (3) ausstattet, die Steuereinheit (12) konfiguriert ist, um die Daten der Geschwindigkeitssensoren (141) zu erfassen und um den dritten Betriebsmodus in Funktion mindestens der Daten zu steuern.

14. Lastenfördergerät (1) nach einem der Ansprüche 1 bis 13, wobei das Absperrorgan (11) mindestens eines der Fluidzirkulationskreisläufe (9, 10) ein elektroproportionales Ventil mit vorzugsweise 5 Wegen/2 Positionen ist.

15. Lastenfördergerät (1) nach einem der Ansprüche 1 bis 14, wobei das Gerät (1) mindestens einen Behälter (17) mit Fluid unter atmosphärischem Druck oder mit Niederdruck umfasst, vorzugsweise im Bereich zwischen 10.10⁴ und 30.10⁴ Pa., und dadurch, dass in der geschlossenen Position des Absperrorgans (11) mindestens einer der Fluidzirkulationskreisläufe (9, 10) des Teils des Fluidzirkulationskreislaufs (9, 10), der sich zwischen dem Absperrorgan (11) und dem hydraulischen oder Getriebemotor (5, 6) erstreckt, der von dem Fluidzirkulationskreislauf (9, 10) versorgt werden kann, mit dem Fluidbehälter (17) verbunden ist.

## Claims

1. A load (18) handling machine (1) comprising at least two front wheels (2), at least one rear wheel (3), a so-called rolling frame (4) equipped with said wheels (2, 3), one or several hydraulic motors (5) or gear motors driving the rotation of the front wheels (2), one or several hydraulic motors (6) or gear motors driving the rotation of the rear wheel(s) (3), and, supported by said frame (4), a load handling device (7) with an empty state in the absence of a load (18) and a loaded state, a hydraulic pump (8), and a control unit (12), each hydraulic motor (5, 6) or gear motor being connected to the hydraulic pump (8), **characterized in that** each hydraulic motor (5, 6) or gear motor is connected to the hydraulic pump (8) by a fluid circulation circuit (9, 10) equipped with a shutter member (11) mounted movably between an open position, in which the hydraulic motor (5; 6) or the gear motor is able to be supplied with fluid by the hydraulic pump (8) and the wheel(s) (2; 3) associated with said hydraulic motor or gear motor are said to be drive wheels, and a closed position, in which the wheel(s) (2; 3) associated with said hydraulic motor or gear motor are said to be non-driving, said fluid circulation circuits (9, 10) being in fluid communication, **in that** the handling machine (1) comprises at least one first operating mode said to be by propulsion wherein the rear wheel(s) (3) are drive wheels and the front wheels (2) are non-driving wheels, a second operating mode said to be by traction wherein the front wheels are drive wheels and the rear wheel(s) are non-driving wheels, and a system (13) for determining a parameter representative of the empty or loaded state of the load handling device (7), and **in that** the control unit (12) is configured to acquire data from the system (13) for determining a parameter representative of the empty or loaded state of the load handling device (7) and to command the first or second operating mode of the machine (1) based on at least said data.

2. The load handling machine (1) according to claim 1, wherein the control unit (12) is configured to command the first operating mode at least in the empty state of the load handling device (7) and the second operating mode at least in the loaded state of the load handling device (7).

3. The load handling machine (1) according to one of claims 1 or 2, wherein the machine (1) comprises a system (14) for determining a parameter representative of the speed of the machine (1) and in that the control unit (12) is configured to acquire data from the system (14) for determining a parameter representative of the speed of the machine (1).

4. The load handling machine (1) according to claim 3, wherein the control unit (12) is configured to command a switch between the first operating mode and the second operating mode based on at least one of said data from the system (14) for determining a parameter representative of the speed of the machine and to prohibit said switch between the first operating mode and the second operating mode when the speed of the machine is non-zero.

5. The load handling machine (1) according to one of claims 3 or 4, wherein the system (14) for determining a parameter representative of the speed of the machine comprises at least one speed sensor (141) for at least one of the wheels (2, 3) of the machine (1).

6. The load handling machine (1) according to one of claims 3 to 5, wherein the hydraulic pump (8) is a variable displacement hydraulic pump and in that the system (14) for determining a parameter representative of the speed of the machine comprises at least one sensor (142) for measuring the displacement of the pump (8).

7. The load handling machine (1) according to one of claims 1 to 6, wherein the load handling device (7) comprises at least one load handling member formed by an arm (71) for lifting a load or a mast (72) for lifting the load and at least one cylinder (73, 74) for driving the displacement of at least part of said handling member between at least two positions, one so-called low position, and another so-called high position.

8. The load handling machine (1) according to claim 7, wherein the system (13) for determining a parameter representative of the empty or loaded state of the load handling device (7) comprises at least one pressure sensor (131) arranged at the or at least one of the cylinders (73, 74) for driving the displacement of at least part of said handling member between the at least two positions.

9. The load handling machine (1) according to one of claims 1 to 8, wherein the system (13) for determining a parameter representative of the empty or loaded state of the load handling device (7) comprises at least one member (132), such as a strain gauge, arranged on the machine (1) and configured to detect a deformation and/or a displacement of the frame (4) and/or of the load handling device (7) during the passage from the empty state to the loaded state or vice versa of the load handling device (7).

10. The load handling machine (1) according to one of claims 1 to 9, wherein the machine (1) comprises a third operating mode in which the front wheels (2) and the rear wheel(s) (3) are drive wheels.

11. The load handling machine (1) according to claim 10, wherein the machine (1) comprises an operating mode selector (15) that can be actuated manually for switching between the third operating mode and one or the other of the first and second operating modes.

12. The load handling machine (1) according to one of claims 10 or 11, wherein the machine (1) comprises an inclinometer (16) and in that the control unit (12) is configured to acquire data supplied by the inclinometer (16) and to command the third operating mode at least based on the data supplied by said inclinometer (16).

13. The load handling machine (1) according to one of claims 10 to 12, wherein, the machine (1) comprising a system (14) for determining a parameter representative of the speed of the machine comprising at least two speed sensors (141), one of which equips one of the front wheels (2), the other of which equips the or one of the rear wheels (3), the control unit (12) is configured to acquire the data from said speed sensors (141), and to command the third operating mode based on at least said data.

14. The load handling machine (1) according to one of claims 1 to 13, wherein the shutter member (11) of at least one of the fluid circulation circuits (9, 10) is an electro-proportional valve, preferably 5 ways/2 positions.

15. The load handling machine (1) according to one of claims 1 to 14, wherein the machine (1) comprises at least one fluid reservoir (17) at atmospheric pressure or at low pressure, preferably between 10.10⁴ and 30.10⁴ Pa and in that, in the closed position of said shutter member (11) of at least one of the fluid circulation circuits (9, 10), the part of the fluid circulation circuit (9, 10) extending between the shutter member (11) and the hydraulic motor (5, 6) or the gear motor able to be supplied by said fluid circulation circuit (9, 10) is connected to said fluid reservoir (17).
